# EUROPEAN PATENT APPLICATION

(11) **EP 4 181 295 A1**
(43) Date of publication of application: **17.05.2023**
(21) Application number: 21948696.6
(22) Date of filing: 22.09.2021
(51) Int. Cl.: H01M 50/249, H01M 50/333

(54) **BATTERY BOX, BATTERY, ELECTRIC APPARATUS, AND METHOD AND APPARATUS FOR PREPARING BATTERY**

(71) Applicant: Contemporary Amperex Technology Co., Limited, Ningde, Fujian 352100 (CN)
(72) Inventor: YANG, Piaopiao, Ningde Fujian 352100 (CN); CHEN, Xiaobo, Ningde Fujian 352100 (CN); LI, Yao, Ningde Fujian 352100 (CN); JIN, Qiu, Ningde Fujian 352100 (CN); QIAN, Ou, Ningde Fujian 352100 (CN)
(74) Representative: Rowlands, Stuart Michael
(86) International application number: PCT/CN2021/119698
(87) International publication number: WO 2023/044619

(57) **Abstract**

Embodiments of the present application provide a box body of a battery, a battery, a power consumption device, and a method and device for producing a battery. The box body of the battery includes: an electrical chamber, configured to accommodate a plurality of battery cells, a first wall of a battery cell being provided with a pressure relief mechanism; a collecting chamber, configured to collect emissions from the battery cell when the pressure relief mechanism is actuated; an isolating component, configured to isolate the electrical chamber from the collecting chamber, the isolating component being provided with a pressure relief region corresponding to the pressure relief mechanism, and the pressure relief region being configured to discharge the emissions from the electrical chamber when the pressure relief mechanism is actuated; and a first insulating layer, configured to seal the pressure relief region to isolate the pressure relief mechanism from the collecting chamber, the first insulating layer being configured to be damaged when the pressure relief mechanism is actuated, so that the emissions are discharged from the electrical chamber via the pressure relief region. The box body of the battery, the battery, the power consumption device, and the method and device for producing the battery of embodiments of the present application could enhance safety of the battery.

## Description

### TECHNICAL FIELD

The present application relates to the field of battery technologies, and in particular, to a box body of a battery, a battery, a power consumption device, and a method and device for producing a battery.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For electric vehicles, battery technology is an important factor for their development.

In the development of battery technology, in addition to improving the performance of batteries, safety is also an issue that cannot be ignored. If the safety of the batteries cannot be ensured, the batteries cannot be used. Therefore, how to enhance the safety of the batteries is an urgent technical problem to be solved in the battery technology.

### SUMMARY

The present application provides a box body of a battery, a battery, a power consumption device, and a method and device for producing a battery, which could enhance safety of the battery.

In a first aspect, a box body of a battery is provided, including: an electrical chamber, configured to accommodate a plurality of battery cells, a first wall of a battery cell being provided with a pressure relief mechanism, and the pressure relief mechanism being configured to be actuated when an internal pressure or temperature of the battery cell reaches a threshold, to relieve the internal pressure; a collecting chamber, configured to collect emissions from the battery cell when the pressure relief mechanism is actuated; an isolating component, configured to isolate the electrical chamber from the collecting chamber, the isolating component being provided with a pressure relief region corresponding to the pressure relief mechanism, and the pressure relief region being configured to discharge the emissions from the electrical chamber when the pressure relief mechanism is actuated; and a first insulating layer, configured to seal the pressure relief region to isolate the pressure relief mechanism from the collecting chamber, the first insulating layer being configured to be damaged when the pressure relief mechanism is actuated, so that the emissions are discharged from the electrical chamber via the pressure relief region.

Therefore, for a battery of an embodiment of the present application, an isolating component is provided with a first insulating layer, which may seal a pressure relief region, and isolate an electrical chamber from a collecting chamber. Even if sealing of the lower collecting chamber fails, it may be ensured that the upper electrical chamber is still sealed through the first insulating layer, thereby protecting the pressure relief mechanism and improving safety of the pressure relief mechanism. For example, it may be ensured that substances or particles in the collecting chamber do not damage or affect the pressure relief mechanism, so that the pressure relief mechanism is not easily damaged when thermal runaway does not occur in the battery cell. Furthermore, when thermal runaway occurs in the battery cell, the pressure relief mechanism is actuated, and the discharged high-temperature emissions may damage the first insulating layer, so that the first insulating layer does not affect discharging of emissions from the battery cell where thermal runaway occurs, to achieve gas exhaustion and heat dissipation timely, and the safety of the battery is further enhanced.

In some embodiments, the pressure relief region is a first through hole penetrating the isolating component.

When the isolating component is provided with a first through hole as a pressure relief region, the discharged emissions can be discharged from the electrical chamber via the through hole more quickly and smoothly after the pressure relief mechanism is actuated. Even if the first insulating layer is sealed at the first through hole, the first insulating layer may also be quickly damaged after the pressure relief mechanism is actuated, and will not affect discharging of the emissions from the first through hole.

In some embodiments, the first insulating layer is disposed on a surface of the isolating component close to the first wall.

The first wall and the isolating component may be connected by an adhesive except for a region where the pressure relief mechanism and the pressure relief region are located, and the adhesive has a certain thickness, that is, there is a certain distance between the first wall and the isolating component. In this case, the first insulating layer is disposed on a surface of the isolating component close to the first wall, and there is no need to provide an additional space and the installation between the battery cell and the isolating component is not affected.

In some embodiments, the first insulating layer is disposed on a surface of the isolating component away from the first wall.

Considering that the pressure relief mechanism needs to have a sufficiently large space for deformation when the pressure relief mechanism is actuated, the first insulating layer is disposed on a surface of the isolating component away from the first wall, which increases the space between the pressure relief mechanism and the first insulating layer and provides a sufficiently large space for deformation of the pressure relief mechanism, and the deformation of the pressure relief mechanism is not affected.

In some embodiments, the first insulating layer is configured to be melted when the pressure relief mechanism is actuated, so that the emissions are discharged from the electrical chamber via the pressure relief region.

Considering that the temperature is relatively high when thermal runaway occurs in the battery cell, the first insulating layer is set as a temperature-sensitive material, and it can be ensured that the first insulating layer is quickly melted when the pressure relief mechanism is actuated, so that emissions are timely discharged from the electrical chamber via the pressure relief region.

In some embodiments, an area of the first insulating layer is larger than an area of the pressure relief mechanism.

An area of the first insulating layer is set to be equal to an area of the pressure relief mechanism, and the first insulating layer and the pressure relief mechanism are set to correspond to each other, which can fully protect the pressure relief mechanism. However, an area of the first insulating layer is set to be larger than an area of the pressure relief mechanism, which can ensure reliability of the first insulating layer, and also solve problems such as the possible dimensional tolerance of the first insulating layer.

In some embodiments, the isolating component is provided with a flow channel, and the flow channel is configured to accommodate a fluid to adjust a temperature of the battery cell.

In some embodiments, the flow channel is configured to be damaged when the pressure relief mechanism is actuated, so that the fluid is discharged from an inner portion of the flow channel.

In some embodiments, a second wall of the flow channel is provided with a second through hole, the second wall is attached to the first wall, and the box body further includes: a second insulating layer, configured to seal the second through hole, the second insulating layer being configured to be melted when the pressure relief mechanism is actuated, so that the fluid flows out toward the battery cell through the second through hole.

The flow channel of the embodiment of the present application is provided with a second through hole, and the second through hole is sealed by a second insulating layer, so that the flow channel is sealed and may accommodate a fluid. When thermal runaway occurs in the battery cell, the temperature of the battery cell increases, and the second insulating layer may be melted, so that the fluid in the flow channel can flow out through the second through hole, that is, it ensures that the flow channel can be damaged, so that the flowing-out fluid may directly lower the temperature of the battery cell. Furthermore, when the fluid flows to the pressure relief region, the fluid may lower the temperature for the emissions from the battery cell, so as to achieve the purpose of preventing thermal diffusion.

In some embodiments, the flow channel is provided with a plurality of second through holes, and the plurality of second through holes are in one-to-one correspondence with the plurality of battery cells. In this way, when thermal runaway occurs in any one of the battery cells, there is a fluid discharged from a corresponding second through hole to lower the temperature.

In some embodiments, the second wall is provided with a recess, a bottom wall of the recess is provided with the second through hole, an opening of the recess is toward the first wall, and the second insulating layer is filled in the recess.

The second insulating layer is filled in the recess, which can increase a contact area between the second insulating layer and the second wall, and increase the stability and reliability of the second insulating layer.

In some embodiments, the second insulating layer covers, on a surface of the bottom wall of the recess away from the first wall, the second through hole.

In this way, the second insulating layer and the second through hole are fixed by means of riveting, which may increase the stability of the second insulating layer.

In some embodiments, a surface of the second insulating layer close to the first wall is flush with a surface of the second wall close to the first wall.

In this way, a surface of the isolating component close to the first wall is relatively flat, which does not affect the installation of other components disposed above the insulating component, for example, does not affect the installation of the battery cell.

In some embodiments, a surface of the second insulating layer close to the first wall protrudes from a surface of the second wall close to the first wall.

This can increase the contact area of the second insulating layer and the second wall, and may ensure that the fluid in the flow channel cannot easily flow out, thereby improving sealing performance and reliability of the second insulating layer.

In some embodiments, an area of the second through hole is less than or equal to 200mm².

If the area of the second through hole is set too large, the fluid flows out too fast, and a total amount of fluid in the flow channel is limited, which may affect the effect of lowering the temperature.

In a second aspect, a battery is provided, including the box body in the first aspect; a plurality of battery cells accommodated in the box body, a first wall of a battery cell being provided with a pressure relief mechanism, and the pressure relief mechanism being configured to be actuated when an internal pressure or temperature of the battery cell reaches a threshold, to relieve the internal pressure.

In a third aspect, a power consumption device is provided, including: the battery in the second aspect, the battery being configured to provide electric energy for the power consumption device.

In some embodiments, the power consumption device is a vehicle, a ship or a spacecraft.

In a fourth aspect, a method for producing a battery is provided, including: providing a plurality of battery cells; providing a box body, where the providing a box body includes: providing an electrical chamber, the electrical chamber being configured to accommodate the plurality of battery cells, a first wall of a battery cell being provided with a pressure relief mechanism, and the pressure relief mechanism being configured to be actuated when an internal pressure or temperature of the battery cell reaches a threshold, to relieve the internal pressure; providing a collecting chamber, the collecting chamber being configured to collect emissions from the battery cell when the pressure relief mechanism is actuated; providing an isolating component, the isolating component being configured to isolate the electrical chamber from the collecting chamber, the isolating component being provided with a pressure relief region corresponding to the pressure relief mechanism, and the pressure relief region being configured to discharge the emissions from the electrical chamber when the pressure relief mechanism is actuated; and providing a first insulating layer, the first insulating layer being configured to seal the pressure relief region to isolate the pressure relief mechanism from the collecting chamber, the first insulating layer being configured to be damaged when the pressure relief mechanism is actuated, so that the emissions are discharged from the electrical chamber via the pressure relief region.

In a fifth aspect, a device for producing a battery is provided, including a module for executing the method in the foregoing fourth aspect.

### BRIEF DESCRIPTION OF THE DRAWINGS

FIG. 1 is a schematic structural diagram of a vehicle according to an embodiment of the present application;
FIG. 2 is a schematic structural diagram of a battery disclosed in an embodiment of the present application;
FIG. 3 is a schematic structural diagram of a battery module disclosed in an embodiment of the present application;
FIG. 4 is an exploded view of a battery cell disclosed in an embodiment of the present application;
FIG. 5 is a schematic diagram of an exploded structure of another battery disclosed in an embodiment of the present application;
FIG. 6 is a schematic diagram of a box body of a battery disclosed in an embodiment of the present application;
FIG. 7 is a schematic exploded view of a collecting chamber disclosed in an embodiment of the present application;
FIG. 8 is a schematic exploded view of another collecting chamber disclosed in an embodiment of the present application;
FIG. 9 is a schematic diagram of a box body of another battery disclosed in an embodiment of the present application;
FIG. 10 is a schematic diagram of a box body of yet another battery disclosed in an embodiment of the present application;
FIG. 11 is a schematic exploded view of a first insulating layer and an insulating component disclosed in an embodiment of the present application;
FIG. 12 is a schematic top view of a case where a battery cell is accommodated in a second portion of a box body disclosed in an embodiment of the present application;
FIG. 13 is a schematic cross-sectional view taken along a direction A-A' shown in FIG. 12;
FIG. 14 is a possible enlarged view of a region B shown in FIG. 13;
FIG. 15 is a top view of an insulating component provided with a first insulating layer disclosed in an embodiment of the present application;
FIG. 16 is another possible enlarged view of a region B shown in FIG. 13;
FIG. 17 is a top view of another insulating component provided with a first insulating layer disclosed in an embodiment of the present application;
FIG. 18 is a schematic exploded view of another isolating component disclosed in an embodiment of the present application;
FIG. 19 is a top view of an isolating component disclosed in an embodiment of the present application;
FIG. 20 is a possible schematic cross-sectional view taken along a direction C-C' shown in FIG. 19;
FIG. 21 is a partially enlarged view of a region D shown in FIG. 20;
FIG. 22 is another possible schematic cross-sectional view taken along a direction C-C' shown in FIG. 19;
FIG. 23 is a partially enlarged view of a region E shown in FIG. 22;
FIG. 24 is a schematic diagram of an isolating component in which a second insulating layer is not provided in FIG. 21 or FIG. 23;
FIG. 25 is a yet another possible schematic cross-sectional view taken along a direction C-C' shown in FIG. 19;
FIG. 26 is a partially enlarged view of a region F shown in FIG. 25;
FIG. 27 is a schematic diagram of an isolating component in which a second insulating layer is not provided in FIG. 26;
FIG. 28 is a schematic flowchart of a method for producing a battery disclosed in an embodiment of the present application; and
FIG. 29 is a schematic block diagram of a device for producing a battery disclosed in an embodiment of the present application.

In accompanying drawings, the accompanying drawings are not drawn to actual scale.

### DESCRIPTION OF EMBODIMENTS

Implementation manners of the present application will be further described below in detail with reference to drawings and embodiments. The detailed description of the following embodiments and the accompanying drawings are used to exemplarily illustrate principles of the present application, but cannot be used to limit the scope of the present application, that is, the present application is not limited to the described embodiments.

In the depiction of the present application, it should be noted that, unless otherwise illustrated, the meaning of "a plurality of' is two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The terms representing orientations in the following description are all directions shown in the drawings, and do not limit the specific structure of the present application. In the description of the present application, it should be further noted that, unless otherwise explicitly specified and defined, terms "installation", "interconnection", and "connection" should be understood in a broad sense; for example, they may be either a fixed connection, or a detachable connection, or an integrated connection; and they may be either a direct connection, or an indirect connection through an intermediate medium. A person of ordinary skill in the art may appreciate the specific meanings of the foregoing terms in the present application according to specific conditions.

In the present application, a battery cell may include a primary battery, a secondary battery, such as a lithium-ion battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is also not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery pack generally includes a box body for packaging one or more battery cells. The box body can avoid liquid or other foreign matters to affect charging or discharging of the battery cell.

The battery cell includes an electrode assembly and an electrolytic solution, and the electrode assembly includes a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive electrode active material layer. The positive electrode active material layer is coated on a surface of the positive electrode current collector, the current collector not coated with the positive electrode active material layer protrudes from the current collector coated with the positive electrode active material layer, and the current collector not coated with the positive electrode active material layer is used as a positive electrode tab. In an example of a lithium-ion battery, the material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The material of the separator may be polypropylene (PP), polyethene (PE), or the like. In addition, the electrode assembly may be a winding structure or a laminated structure, and the embodiments of the present application are not limited thereto. With the development of the battery technology, it is necessary to consider design factors in multiple aspects simultaneously, such as energy density, cycle life, discharge capacity, C-rate and other performance parameters. In addition, safety of the battery should also be considered.

For a battery, a main safety hazard comes from charging and discharging processes, and in order to improve safety performance of the battery, a battery cell is generally provided with a pressure relief mechanism. The pressure relief mechanism refers to an element or component that is actuated when an internal pressure or temperature of the battery cell reaches a predetermined threshold, to relieve the internal pressure or temperature. The predetermined threshold may be adjusted according to different design demands. The predetermined threshold may depend on a material of one or more of a positive electrode sheet, a negative electrode sheet, an electrolytic solution and a separator in the battery cell. The pressure relief mechanism may adopt, for example, a pressure-sensitive or temperature-sensitive element or component. That is, when the internal pressure or temperature of the battery cell reaches the predetermined threshold, the pressure relief mechanism is actuated, so as to form a channel for relieving the internal pressure or temperature.

The "actuation" mentioned in the present application means that the pressure relief mechanism acts, so that the internal pressure and temperature of the battery cell can be relieved. The action generated by the pressure relief mechanism may include but be not limited to: at least a part of the pressure relief mechanism being fractured, torn or melted, and so on. After the pressure relief mechanism is actuated, high-temperature and high-pressure substances inside the battery cell are discharged outward from the pressure relief mechanism as emissions. In this way, the pressure of the battery cell can be relieved at a controllable pressure or temperature, thereby avoiding potentially more serious accidents.

The emissions from the battery cell mentioned in the present application include but are not limited to: an electrolytic solution, dissolved or split positive and negative electrode sheets, fragments of a separator, high-temperature and high-pressure gas generated by reaction, flame, or the like.

The pressure relief mechanism on the battery cell has an important impact on the safety of the battery. For example, when short circuit, overcharge and other phenomena occur in the battery cell, it may lead to thermal runaway inside the battery cell, resulting in a sudden increase in pressure or temperature. In this case, the internal pressure and temperature can be released outward through the actuation of the pressure relief mechanism, to prevent the battery cell from exploding and catching fire.

In the current design solutions of the pressure relief mechanism, the main concern is to release the high pressure and high heat inside the battery cell, that is, the emissions are discharged to an outside of the battery cell. However, in order to ensure an output voltage or current of the battery, a plurality of battery cells are often required and electrically connected to each other via a bus component. Emissions discharged from an inside of a battery cell may cause short circuit of the other battery cells. For example, when discharged metal scraps electrically connect two bus components, the battery is short-circuited, thereby posing a potential safety hazard. Moreover, the high-temperature and high-pressure emissions are discharged in a direction in which a pressure relief mechanism of the battery cell is provided, and more specifically, may be discharged in a direction of a region where the pressure relief mechanism is actuated. The strength and destructive power of such emissions may be great, or may even be enough to break through one or more structures in this direction, causing further safety problems.

Therefore, the battery of the embodiment of the present application may further include an isolating component, and an electrical chamber for accommodating the battery cell is separated from a collecting chamber for collecting the emissions by means of the isolating component. When the pressure relief mechanism is actuated, the emissions from the battery cell enter the collecting chamber, and do not enter the electrical chamber or enter the electrical chamber in a small amount, so that the electrical connection component in the electrical chamber is not conducted and short-circuited, thus enhancing the safety of the battery.

Specially, the isolating component is configured to isolate the electrical chamber from the collecting chamber, so that the electrical chamber and the collecting chamber are disposed on both sides of the isolating component. Optionally, the isolating component of the embodiment of the present application may also be used as a thermal management component, that is, the isolating component may accommodate a fluid to adjust the temperature of the plurality of battery cells. The fluid here may be liquid or gas, and the temperature adjustment means heating or cooling the plurality of battery cells. In the case of cooling or lowering the temperature of the battery cells, the isolating component is configured to accommodate a cooling fluid to lower the temperature of the plurality of battery cells. In addition, the isolating component may also be used for heating to raise the temperature of the plurality of battery cells, which is not limited by the embodiment of the present application. Optionally, the fluid may flow in a circulating manner to achieve a better temperature adjustment effect. Optionally, the fluid may be water, a mixture of water and ethylene glycol, air, or the like.

The electrical chamber mentioned in the present application is configured to accommodate a plurality of battery cells and a bus component. The electrical chamber provides an installation space for the battery cells and the bus component. In some embodiments, a structure configured to fix the battery cells may also be disposed in the electrical chamber. The shape of the electrical chamber may be determined according to the number and shape of the battery cells and the bus component which are accommodated therein. In some embodiments, the electrical chamber may be a cube with six walls. The bus component mentioned in the present application is used to realize the electrical connection between the plurality of battery cells, such as parallel or series connection or parallel-series connection. The bus component may implement the electrical connection between the battery cells by connecting electrode terminals of the battery cells. In some embodiments, the bus component may be fixed to the electrode terminals of the battery cells by means of welding.

The collecting chamber mentioned in the present application is configured to collect the emissions. In some embodiments, the collecting chamber may contain air or another gas. Optionally, the collecting chamber may also contain a liquid, such as a cooling medium, or a component for accommodating the liquid is provided to further lower the temperature of the emissions entering the collecting chamber. Further, optionally, the gas or liquid in the collecting chamber flows in a circulating manner.

It should be understood that the isolating component of the embodiment of the present application is provided with a pressure relief region corresponding to the pressure relief mechanism. For example, the pressure relief region may be a pressure relief hole, so as to avoid the pressure relief mechanism being blocked, ensure that the pressure relief mechanism can be smoothly damaged, and also enable the emissions discharged from the battery cell to be capable of being discharged through the pressure relief hole. Also, the isolating component may also lower the temperature of the battery cell, so as to avoid explosion of the battery cell.

It should be understood that between a wall of the battery cell provided with the pressure relief mechanism and the isolating component, except for the pressure relief region, connection between the battery cell and the isolating component is generally achieved by an adhesive. For example, the adhesive may be a thermally conductive glue, which has a thickness, and may also protect the wall of the battery cell. However, in a region of the pressure relief mechanism of the battery cell, a corresponding isolating component is provided with a pressure relief region. The pressure relief region is not provided with an adhesive and is relatively weak. Alternatively, the pressure relief region may be a pressure relief hole, and then the pressure relief mechanism is in communication with the collecting chamber, and during long-term use of the battery, there is a serious safety hazard. For example, during the use of the battery, due to vibration of the battery, objects or particles in the collecting chamber may affect the pressure relief mechanism through the pressure relief hole, resulting in failure of the pressure relief mechanism, for example, it may cause that the pressure relief mechanism is damaged in a case where no thermal runaway occurs in the battery cell, thereby affecting the service life of the battery.

Therefore, the isolating component of the embodiment of the present application is provided with a first insulating layer, and the first insulating layer may seal the pressure relief region, and isolate the electrical chamber from the collecting chamber. In this way, even if sealing of the lower collecting chamber fails, it may be ensured that the upper electrical chamber is still sealed, thereby protecting the pressure relief mechanism and improving safety of the pressure relief mechanism. Furthermore, when thermal runaway occurs in the battery cell, the pressure relief mechanism is actuated, and the discharged high-temperature emissions may damage the first insulating layer, so that the first insulating layer does not affect gas exhaustion of the battery cell where thermal runaway occurs.

The technical solutions described in the embodiments of the present application are all applicable to various devices using batteries, such as mobile phones, portable devices, notebook computers, electromobiles, electric toys, electric tools, electric vehicles, ships and spacecrafts. For example, the spacecrafts include airplanes, rockets, space shuttles, spaceships, and the like.

It should be understood that the technical solutions described in the embodiments of the present application are not only applicable to the devices described above, but also applicable to all devices using batteries. However, for brief description, the following embodiments are all described by an example of an electric vehicle.

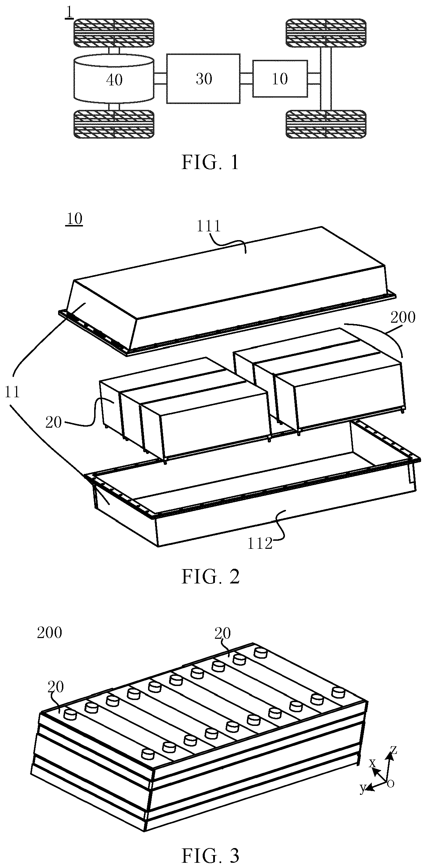

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be disposed in an interior of the vehicle 1, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power source of the vehicle 1 for a circuit system of the vehicle 1, for example, for a working power demand of the vehicle 1 during startup, navigation and running. In another embodiment of the present application, the battery 10 may be used not only as an operation power source of the vehicle 1, but also as a driving power source of the vehicle 1, replacing or partially replacing fuel or natural gas to provide driving power for the vehicle 1.

In order to meet different power usage demands, the battery may include a plurality of battery cells, where the plurality of battery cells may be in series connection, parallel connection or series-parallel connection. The series-parallel connection refers to a combination of series connection and parallel connection. The battery may also be referred to as a battery pack. Optionally, the plurality of battery cells may be first connected in series, in parallel or in series and parallel to constitute a battery module, and then a plurality of battery modules are connected in series, in parallel or in series and parallel to constitute a battery. That is, the plurality of battery cells may directly constitute a battery, or may first constitute a battery module, and then battery modules constitute a battery.

For example, FIG. 2 shows a schematic structural diagram of a battery 10 according to an embodiment of the present application. The battery 10 may include at least one battery module 200. The battery module 200 includes a plurality of battery cells 20. The battery 10 may further include a box body 11, an inside of the box body 11 is a hollow structure, and the plurality of battery cells 20 are accommodated in the box body 11. FIG. 2 shows a possible implementation manner of the box body 11 according to an embodiment of the present application. As shown in FIG. 2, the box body 11 may include two portions, which are referred to as a first portion 111 and a second portion 112, respectively, and the first portion 111 and the second portion 112 are fastened together. Shapes of the first portion 111 and the second portion 112 may be determined according to a shape of combined battery modules 200, and at least one of the first portion 111 and the second portion 112 has an opening. For example, as shown in FIG. 2, the first portion 111 and the second portion 112 each may be a hollow cuboid and each have only one face as an opening face, and an opening of the first portion 111 is arranged opposite to an opening of the second portion 112. The first portion 111 and the second portion 112 are fastened to each other to form a box body 11 with a closed chamber.

For another example, different from that shown in FIG. 2, only one of the first portion 111 and the second portion 112 may be a hollow cuboid with an opening, and the other may be in a plate shape to cover the opening. For example, in an example that the second portion 112 is a hollow cuboid and has only one face as an opening face and the first portion 111 is in a plate shape, then the opening of the second portion 112 is covered by the first portion 111 to form a box body 11 with a closed chamber, and the chamber may be configured to accommodate the plurality of battery cells 20. The plurality of battery cells 20 are combined in parallel connection or series connection or series-parallel connection and then placed in the box body 11 formed after the first portion 111 to the second portion 112 are fastened.

Optionally, the battery 10 may further include other structures, which will not be repeated redundantly herein. For example, the battery 10 may further include a bus component, and the bus component is configured to implement electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism to pass through the box body 11.

According to different power demands, the number of battery cells 20 in a battery module 200 may be set to any value. The plurality of battery cells 20 may be connected in series, in parallel or in series and parallel to implement a larger capacity or power. Since there may be many battery cells 20 included in each battery 10, the battery cells 20 are arranged in groups for convenience of installation, and each group of battery cells 20 constitutes a battery module 200. The number of battery cells 20 included in the battery module 200 is not limited and may be set according to demands. For example, FIG. 3 is an example of the battery module 200. A battery may include a plurality of battery modules 200, and these battery modules 200 may be connected in series, in parallel or in series and parallel.

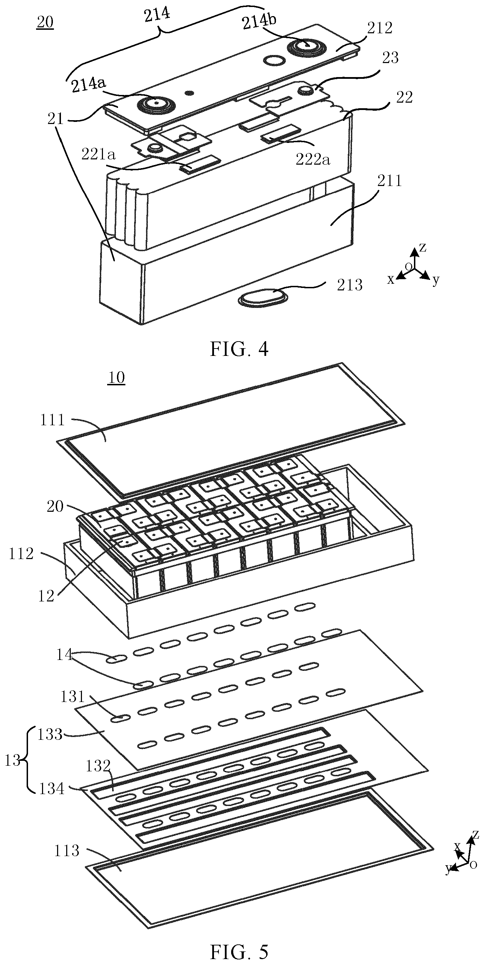

FIG. 4 is a schematic structural diagram of a battery cell 20 according to an embodiment of the present application. The battery cell 20 includes one or more electrode assemblies 22, a housing 211 and a cover plate 212. The housing 211 and the cover plate 212 form a shell 21. A wall of the housing 211 and the cover plate 212 each are referred to as a wall of the battery cell 20. The housing 211 is shaped according to a shape of the one or more electrode assemblies 22 after combination. For example, the housing 211 may be a hollow cuboid or cube or cylinder, and one face of the housing 211 has an opening, so that the one or more electrode assemblies 22 may be placed in the housing 211. For example, when the housing 211 is a hollow cuboid or cube, one plane of the housing 211 is an opening face, that is, the plane does not have a wall, so that the inside and outside of the housing 211 are in communication with each other. When the housing 211 may be a hollow cylinder, an end face of the housing 211 is an opening face, that is, the end face does not have a wall, so that the inside and outside of the housing 211 are in communication with each other. The cover plate 212 covers the opening and is connected to the housing 211 to form a closed chamber in which the electrode assemblies 22 are placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in a shape of a flat plate, and the two electrode terminals 214 are fixed on a flat plate face of the cover plate 212. The two electrode terminals 214 are a first electrode terminal 214a and a second electrode terminal 214b, respectively. The two electrode terminals 214 have opposite polarities. For example, when the first electrode terminal 214a is a positive electrode terminal, the second electrode terminal 214b is a negative electrode terminal. Each electrode terminal 214 is correspondingly provided with a connecting member 23, which is located between the cover plate 212 and the electrode assembly 22 and configured to electrically connect the electrode assembly 22 to the electrode terminal 214.

As shown in FIG. 4, each electrode assembly 22 has a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. First electrode tabs 221a of the one or more electrode assemblies 22 are connected to one electrode terminal through one connecting member 23, and second electrode tabs 222a of the one or more electrode assemblies 22 are connected to the other electrode terminal through the other connecting member 23. For example, the positive electrode terminal 214a is connected to the positive electrode tab through one connecting member 23, and the negative electrode terminal 214b is connected to the negative electrode tab through the other connecting member 23.

In this battery cell 20, according to actual usage demands, one or more electrode assembly 22 may be provided. As shown in FIG. 4, four independent electrode assemblies 22 are disposed in the battery cell 20.

As shown in FIG. 4, a pressure relief mechanism 213 may be disposed on one wall of the battery cell 20, for example, the pressure relief mechanism 213 may be disposed on a first wall 21a of the battery cell 20, and the first wall 21a may be any wall of the housing 211. Specifically, in an example that the first wall 21a is a bottom wall of the housing 211 here, the bottom wall of the housing 211 is a wall opposite to the opening (not shown in FIG. 4).

Optionally, the first wall 21a may be disposed separately from the housing 211, that is, a bottom side of the housing 211 has an opening, the first wall 21a covers the opening at the bottom side and is connected to the housing 211, and the connection manner may be welding, connecting with an adhesive, or the like. Alternatively, the first wall 21a and the housing 211 may also be an integral structure. The pressure relief mechanism 213 is configured to be actuated when an internal pressure or temperature of the battery cell 20 reaches a threshold, to relieve the internal pressure or temperature.

The pressure relief mechanism 213 may be a part of the first wall 21a, or may be a separate structure from the first wall 21a, and is fixed to the first wall 21a by means of welding, for example. When the pressure relief mechanism 213 is a part of the first wall 21a, for example, the pressure relief mechanism 213 may be formed by providing an indentation on the first wall 21a, and a thickness of the first wall 21a at the indentation is smaller than that of another region other than the indentation. The indentation is the weakest position of the pressure relief mechanism 213. When excessive gas generated by the battery cell 20 causes an internal pressure of the housing 211 to rise and reach a threshold, or heat generated by an internal reaction of the battery cell 20 causes an internal temperature of the battery cell 20 to rise and reach a threshold, the pressure relief mechanism 213 may be fractured at the indentation, resulting in the communication between the inside and outside of the housing 211. The gas pressure and temperature are released outward through the cracking of the pressure relief mechanism 213, thereby avoid explosion of the battery cell 20.

Optionally, in an embodiment of the present application, as shown in FIG. 4, in a case where the pressure relief mechanism 213 is disposed on the first wall 21a of the battery cell 20, a second wall of the battery cell 20 is provided with electrode terminals 214, and the second wall is different from the first wall 21a.

Optionally, the second wall is arranged opposite to the first wall 21a. For example, the first wall 21a may be a bottom wall of the battery cell 20, and the second wall may be the cover plate 212 of the battery cell 20.

The pressure relief mechanism 213 and the electrode terminals 214 are disposed on different walls of the battery cell 20, so that when the pressure relief mechanism 213 is actuated, emissions from the battery cell 20 may be farther away from the electrode terminals 214, thereby reducing the impact of the emissions on the electrode terminals 214 and the bus component 12, and therefore safety of the battery could be enhanced.

Further, when the electrode terminals 214 are disposed on the cover plate 212 of the battery cell 20, the pressure relief mechanism 213 is disposed on a bottom wall of the battery cell 20, so that when the pressure relief mechanism 213 is actuated, the emissions from the battery cell 20 may be are discharged to a bottom of the battery 10. In this way, on one hand, a risk of the emissions may be reduced by using a thermal management component at the bottom of the battery 10, and on the other hand, when the battery 10 is disposed in a vehicle, the bottom of the battery 10 is usually away from a passenger, thereby reducing harm to the passenger.

The pressure relief mechanism 213 may be in various possible pressure relief structures, which is not limited in the embodiments of the present application. For example, the pressure relief mechanism 213 may be a temperature-sensitive pressure relief mechanism, the temperature-sensitive pressure relief mechanism is configured to be capable of being melted when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being fractured when an internal gas pressure of the battery cell 20 provided with the pressure relief mechanism 213 reaches a threshold.

In order to adjust the temperature of the battery cell 20, a thermal management component may be disposed under the battery cell 20. Specifically, the thermal management component may be configured to accommodate the fluid to adjust the temperature of the battery cell 20, and when the pressure relief mechanism 213 is actuated, the thermal management component can lower the temperature of the emissions from the battery cell 20 provided with the pressure relief mechanism 213.

Optionally, the thermal management component may be provided with the pressure relief region, for example, the pressure relief region may be the pressure relief hole. In this way, when the pressure relief mechanism 213 is actuated, the pressure relief mechanism 213 is opened to discharge the emissions from the battery cell 20, and the emissions may also pass through the thermal management component by the pressure relief hole to be discharged.

It should be understood that between a wall of the battery cell 20 provided with the pressure relief mechanism 213 and the thermal management component, except for the pressure relief region, connection between the battery cell 20 and the thermal management component is generally achieved by an adhesive. For example, the adhesive may be a thermally conductive glue, which has a thickness, and may also protect the wall of the battery cell 20. However, at a position corresponding to the pressure relief mechanism 213 of the battery cell 20, the isolating component is provided with a pressure relief region. The pressure relief region is not provided with an adhesive and is relatively weak. Alternatively, the pressure relief region may be a pressure relief hole, and then the pressure relief mechanism 213 is in communication with the outside, and during long-term use of the battery 10, there is a serious safety hazard. For example, during the use of the battery 10, due to vibration of the battery 10, objects or particles outside the thermal management component may affect the pressure relief mechanism 213 through the pressure relief hole, resulting in failure of the pressure relief mechanism 213, for example, it may cause that the pressure relief mechanism 213 is damaged in a case where no thermal runaway occurs in the battery cell 20, thereby affecting the service life of the battery 10.

Therefore, an embodiment of the present application provides a battery 10, which can solve the foregoing problem.

FIG. 5 shows another schematic exploded view of a battery 10 according to an embodiment of the present application. As shown in FIG. 5 , the battery 10 may include: an electrical chamber 11a, configured to accommodate a plurality of battery cells 20, a first wall 21a of a battery cell 20 being provided with a pressure relief mechanism 213, and the pressure relief mechanism 213 being configured to be actuated when an internal pressure or temperature of the battery cell 20 reaches a threshold, to relieve the internal pressure; a collecting chamber 11b, configured to collect emissions from the battery cell 20 when the pressure relief mechanism 213 is actuated; an isolating component 13, configured to isolate the electrical chamber 11a from the collecting chamber 11b, the isolating component 13 being provided with a pressure relief region 131 corresponding to the pressure relief mechanism 213, and the pressure relief region 131 being configured to discharge the emissions from the electrical chamber 11a when the pressure relief mechanism 213 is actuated; and a first insulating layer 14, configured to seal the pressure relief region 131 to isolate the pressure relief mechanism 213 from the collecting chamber 11b, the first insulating layer 14 being configured to be damaged when the pressure relief mechanism 213 is actuated, so that the emissions are discharged from the electrical chamber 11a via the pressure relief region 131.

Therefore, for the battery 10 of the embodiment of the present application, the isolating component 13 is provided with the first insulating layer 14, which may seal a pressure relief region 131, and isolate an electrical chamber 11a from a collecting chamber 11b. Even if sealing of the lower collecting chamber 11b fails, it may be ensured that the upper electrical chamber 11a is still sealed through the first insulating layer 14, thereby protecting the pressure relief mechanism 213 and improving safety of the pressure relief mechanism 213. For example, it may be ensured that substances or particles in the collecting chamber 11b do not damage or affect the pressure relief mechanism 213, so that the pressure relief mechanism 213 is not easily damaged when thermal runaway does not occur in the battery cell 20. Furthermore, when thermal runaway occurs in the battery cell 20, the pressure relief mechanism 213 is actuated, and the discharged high-temperature emissions may damage the first insulating layer 14, so that the first insulating layer 14 does not affect discharging of emissions from the battery cell 20 where thermal runaway occurs, to achieve gas exhaustion and heat dissipation timely, and the safety of the battery 10 is further enhanced.

It should be understood that the battery 10 according to the embodiment of the present application may include an electrical chamber 11a and a collecting chamber 11b. The battery 10 provided with the electrical chamber 11a, the collecting chamber 11b and the isolating component 13 will be described in detail below with reference to the accompanying drawings.

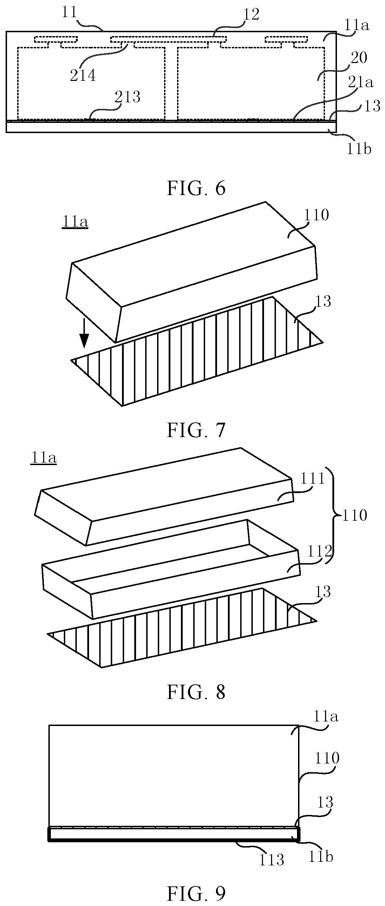

FIG. 6 is a schematic structural diagram of a box body 11 of a battery 10 according to an embodiment of the present application. As shown in FIG. 6, the box body 11 of the embodiment of the present application may include an electrical chamber 11a, a collecting chamber 11b, and an isolating component 13. The isolating component 13 is configured to isolate the electrical chamber 11a from the collecting chamber 11b. The so-called "isolation" here refers to separation, which may or may not be sealed.

The electrical chamber 11a is configured to accommodate a plurality of battery cells 20, and optionally the electrical chamber 11a may also be configured to accommodate a bus component 12, to implement electrical connection among the plurality of battery cells 20. The electrical chamber 11a provides an accommodation space for the battery cells 20 and the bus component 12, and the electrical chamber 11a may be shaped according to the plurality of battery cells 20 and the bus component 12.

The bus component 12 is configured to implement electrical connection between the plurality of battery cells 20. The bus component 12 may implement the electrical connection between the battery cells 20 by connecting electrode terminals 214 of the battery cells 20.

At least one battery cell 20 of the plurality of battery cells 20 may include a pressure relief mechanism 213, for example, the pressure relief mechanism 213 may be disposed on a first wall 21a of the battery cell 20, and in FIG. 6, a case where the first wall 21a is a bottom wall of the battery cell 20 is taken as an example for description. The pressure relief mechanism 213 is configured to be actuated when an internal pressure or temperature of the battery cell 20 provided with the pressure relief mechanism 213 reaches a threshold, to relieve the internal pressure or temperature.

For convenience of description, the battery cell 20 involved in the following description of the pressure relief mechanism 213 refers to the battery cell 20 provided with the pressure relief mechanism 213. For example, the battery cell 20 may be the battery cell 20 in FIG. 4.

The collecting chamber 11b is configured to collect the emissions from the battery cell 20 provided with the pressure relief mechanism 213 when the pressure relief mechanism 213 is actuated.

In the embodiment of the present application, the isolating component 13 is adopted to isolate the electrical chamber 11a from the collecting chamber 11b. In other words, the electrical chamber 11a for accommodating the plurality of battery cells 20 and the bus component 12 is separated from the collecting chamber 11b for collecting the emissions. In this way, when the pressure relief mechanism 213 is actuated, the emissions from the battery cell 20 enter the collecting chamber 11b, and do not enter the electrical chamber 11a, or enter the electrical chamber 11a in a small amount, so that the electrical connection in the electrical chamber 11a is not affected, thus enhancing the safety of the batteries.

Optionally, in an embodiment of the present application, the isolating component 13 has a wall shared by the electrical chamber 11a and the collecting chamber 11b. As shown in FIG. 6, the isolating component 13 may be both a wall of the electrical chamber 11a and a wall of the collecting chamber 11b. That is, the isolating component 13 (or a portion thereof) may be directly used as a wall shared by the electrical chamber 11a and the collecting chamber 11b. In this way, the emissions from the battery cell 20 may enter the collecting chamber 11b through the isolating component 13. Meanwhile, due to the existence of the isolating component 13, the emissions may be isolated from the electrical chamber 11a as far as possible, thereby reducing the risk of the emissions and enhancing the safety of the battery.

It should be understood that the box body 11 of the battery 10 according to the embodiment of the present application may have various implementation manners, and correspondingly, the electrical chamber 11a and the collecting chamber 11b included in the box body 11 may have various implementation manners. Optionally, in an embodiment of the present application, the electrical chamber 11a may be composed of a covering having an opening, and the isolating component 13. For example, FIG. 7 shows a schematic exploded view of an electrical chamber 11a according to an embodiment of the present application. As shown in FIG. 7, the box body 11 may include a covering 110 with an opening (for example, the opening is at the lower side of the covering 110 in FIG. 7). The covering 110 with the opening is a semi-closed chamber with an opening in communication with the outside, and the isolating component 13 covers the opening to form a chamber, that is, the electrical chamber 11a.

Optionally, the covering 110 may also be composed of multiple portions, for example, FIG. 8 shows another schematic exploded view of an electrical chamber 11a according to an embodiment of the present application, and the covering 110 may include a first portion 111 and a second portion 112. Two sides of the second portion 112 have openings respectively, that is, the second portion 112 only has surrounding walls. The first portion 111 covers the opening on one side of the second portion 112, and the isolating component 13 covers the opening on the other side of the second portion 112, thus forming the electrical chamber 11a.

The embodiments of FIG. 8 may be obtained through improvements on the basis of FIG. 2. Specifically, a bottom wall of the second portion 112 in FIG. 2 may be replaced with the isolating component 13, and the isolating component 13 serves as a wall of the electrical chamber 11a, thus forming the electrical chamber 11a in FIG. 8. In other words, the bottom wall of the second portion 112 in FIG. 2 may be removed. That is, an annular wall with openings on both sides is formed, and the first portion 111 and the isolating component 13 cover the openings on the two sides of the second portion 112 respectively to form a chamber, namely the electrical chamber 11a.

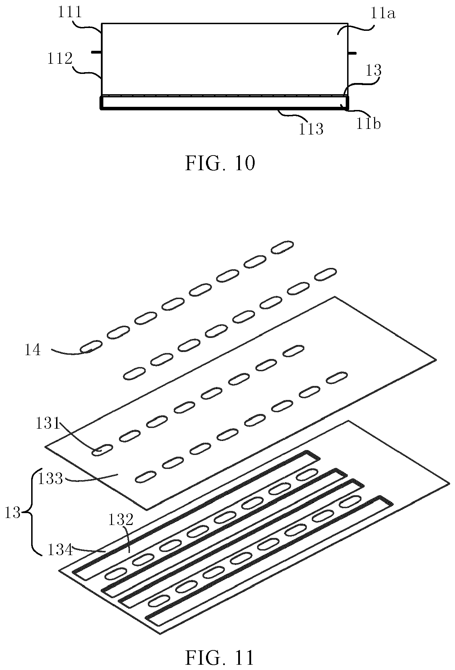

Optionally, in an embodiment of the present application, the collecting chamber 11b may be composed of the isolating component 13 and a protective member 113. For example, FIG. 9 shows a schematic diagram of a box body 11 according to an embodiment of the present application, where an electrical chamber 11a shown in FIG. 9 is the electrical chamber 11a shown in FIG. 7. FIG. 10 shows another schematic diagram of a box body 11 according to an embodiment of the present application, where an electrical chamber 11a shown in FIG. 10 is the electrical chamber 11a shown in FIG. 8. As shown in FIG. 9 and FIG. 10, the box body 11 further includes a protective member 113. The protective member 113 is configured to protect the isolating component 13, and the protective member 113 and the isolating component 13 form the collecting chamber 11b.

The collecting chamber 11b formed by the protective member 113 and the isolating component 13 does not occupy a space that may accommodate the battery cell. Therefore, the collecting chamber 11b with a larger space therein may be arranged, which may effectively collect and buffer the emissions and reduce the risk resulting therefrom.

Optionally, in an embodiment of the present application, a fluid, such as a cooling medium, or a component for accommodating the fluid may be further arranged in the collecting chamber 11b to further lower the temperature of the emissions entering the collecting chamber 11b.

Optionally, in an embodiment of the present application, the collecting chamber 11b may be a sealed chamber with respect to an outer portion of the box body 11. For example, the connection between the protective member 113 and the isolating component 13 may be sealed by a sealing member.

Optionally, in an embodiment of the present application, the collecting chamber 11b may not be a sealed chamber with respect to an outer portion of the box body 11. For example, the collecting chamber 11b may be in communication with external air, so that a part of the emissions may further be discharged to the outside of the box body 11.

In the foregoing embodiment, the isolating component 13 covers the opening of the covering 110 to form an electrical chamber 11a, and the isolating component 13 and the protective member 113 form the collecting chamber 11b. Optionally, the isolating component 13 may also directly separate the closed box body 11 into the electrical chamber 11a and the collecting chamber 11b, and there is no need for an additional protective member 113.

For example, in an embodiment of the present application, taking FIG. 8 as an example, the covering 110 may include the first portion 111 and the second portion 112, where the first portion 111 and the second portion 112 both have a cavity structure with an opening on one side and may respectively form a semi-closed structure. The isolating component 13 may be disposed inside the second portion 112, and the first portion 111 covers the opening of the second portion 112. In other words, the isolating component 13 may be first placed in the semi-closed second portion 112 to isolate the collecting chamber 11b, and then the first portion 111 covers the opening of the second portion 112 to form the electrical chamber 11a. In this way, compared with FIG. 10, it can be seen that the protective member 113 may be replaced with the bottom wall of the second portion 112 to form the collecting chamber 11b.

An isolating component 13 and a first insulating layer 14 of an embodiment of the present application will be described in detail below with reference to the accompanying drawings. FIG. 11 shows a schematic exploded view of a first insulating layer 14 and an isolating component 13 according to an embodiment of the present application. Optionally, the isolating component 13 of the embodiment of the present application may also serve as a thermal management component, that is, the isolating component 13 may accommodate a fluid to adjust a temperature of a plurality of battery cells 20.

As shown in FIG. 11, an isolating component 13 of the embodiment of the present application may include a first thermal conductive plate 133 and a second thermal conductive plate 134. The first thermal conductive plate 133 is disposed between the second thermal conductive plate 134 and a first wall 21a of a battery cell 20, and the first thermal conductive plate 133 is attached to the first wall 21a, where an upper surface of the first thermal conductive plate 133 is attached to the first wall 21a of the battery cell 20, and the first thermal conductive plate 133 and the second thermal conductive plate 134 are connected.

It should be understood that in the embodiment of the present application, that an upper surface of the first thermal conductive plate 133 is attached to the first wall 21a of the battery cell 20 may include: the upper surface of the first thermal conductive plate 133 comes into contact with the first wall 21a by an adhesive, to realize the connection and thermal exchange between the upper surface of the first thermal conductive plate 133 and the first wall 21a of the battery cell 20, where the adhesive may be a thermally conductive glue or other substances.

It should be understood that the isolating component 13 of the embodiment of the present application is provided with a pressure relief region 131. For example, the pressure relief region 131 may be a through hole or a recess. As shown in FIG. 11, a case where the pressure relief region 131 is a first through hole 131 penetrating the isolating component 13 is taken as an example, the first thermal conductive plate 133 and the second thermal conductive plate 134 may be respectively provided with through holes corresponding to each other in positions, so as to form the first through hole 131, that is, the first through hole 131 penetrates the first thermal conductive plate 133 and the second thermal conductive plate 134, respectively. When the isolating component 13 is provided with the first through hole 131, the discharged emissions may be discharged from the electrical chamber 11a via the through hole more quickly and smoothly after the pressure relief mechanism 213 is actuated.

Alternatively, different from FIG. 11, the pressure relief region 131 of the present embodiment may also be a recess, and the recess may be disposed in various ways to form the pressure relief region 131. For example, the first thermal conductive plate 133 and the second thermal conductive plate 134 may be provided with recesses with openings having the same direction to form the pressure relief region 131, where the opening of the recess is toward the pressure relief mechanism 213 of the battery cell 20. For another example, a through hole may also be disposed on the first thermal conductive plate 133, and a recess with an opening toward the first thermal conductive plate 133 may be disposed at a corresponding position on the second thermal conductive plate 134 to form the pressure relief region 131, and the embodiment of the present application is not limited thereto. In a case where the isolating component 13 is provided with a recess as the pressure relief region 131, when the isolating component 13 is not damaged, the electrical chamber 11a and the collecting chamber 11b are relatively closed, and the pressure relief mechanism 213 is more stable.

For convenience of explanation, a case where the first through hole 131 is the pressure relief region 131 is taken as an example hereinafter for description. For example, a first insulating layer 14 of the embodiment of the present application is configured to seal the pressure relief region 131 of the isolating component 13, that is, the first insulating layer 14 may be configured to seal the first through hole 131.

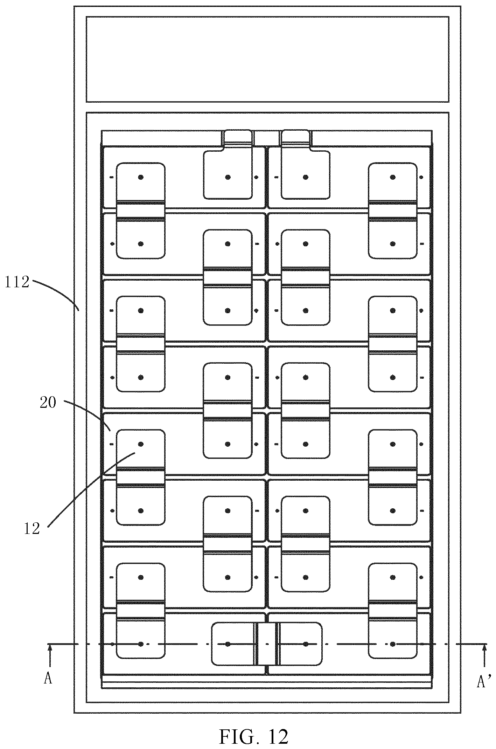

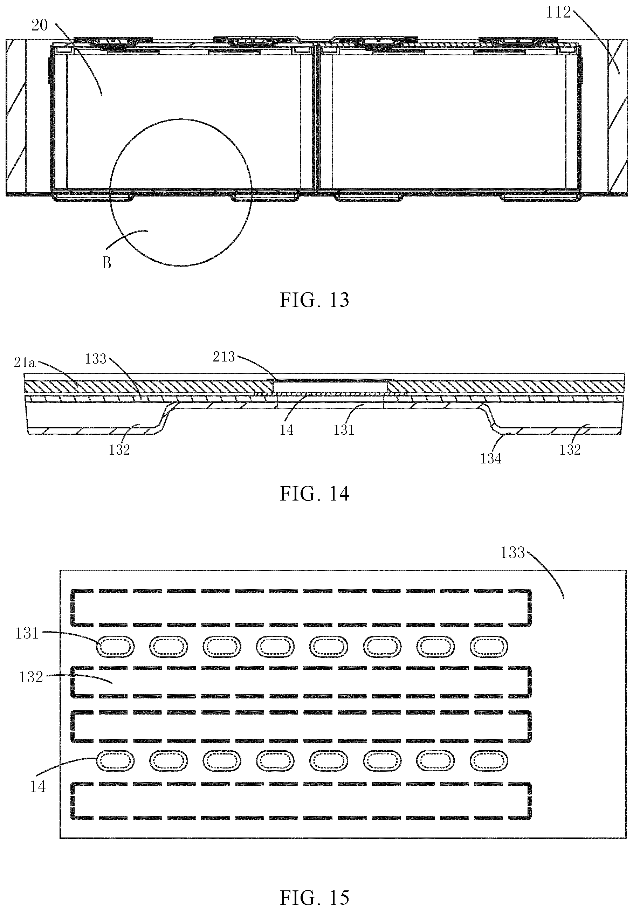

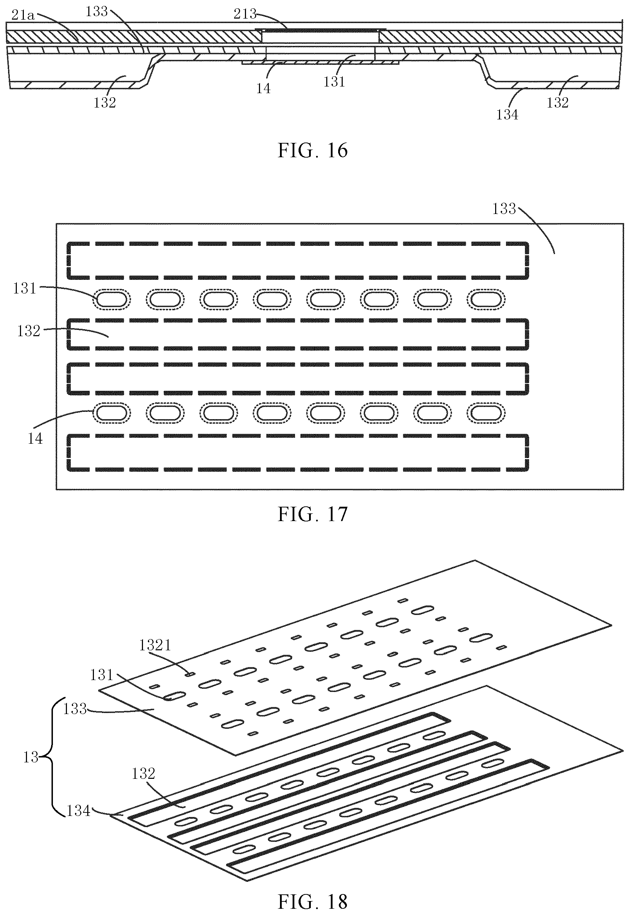

Optionally, the first insulating layer 14 of the embodiment of the present application may be disposed on any cross section of the first through hole 131 to seal the first through hole 131. Specifically, FIG. 12 is a schematic top view of a case where a battery cell 20 is accommodated in a second portion 112 of a box body 11 according to an embodiment of the present application, FIG. 13 is a cross-sectional view taken along a direction A-A' shown in FIG. 12, where for a region B including a pressure relief mechanism 213 and a first through hole 131 in FIG. 13, FIG. 14 shows a possible partial enlarged view of the region B shown in FIG. 13, FIG. 15 is a top view of an insulating component 13 provided with a first insulating layer 14 corresponding to FIG. 14, FIG. 16 shows another possible partial enlarged view of a region B, and FIG. 17 is a top view of an insulating component 13 provided with a first insulating layer 14 corresponding to FIG. 16.

As shown in FIGS. 14 and 15, an first insulating layer 14 of an embodiment of the present application may be disposed on a surface of an isolating component 13 close to a first wall 21a, that is, the first insulating layer 14 may be disposed at one end of a first through hole 131 close to a pressure relief mechanism 213. As shown in FIG. 14, the first wall 21a and the first thermal conductive plate 133 may be connected by an adhesive except for a region where the pressure relief mechanism 213 and the first through hole 131 are located, and the adhesive has a certain thickness, that is, there is a certain distance between the first wall 21a and the first thermal conductive plate 133. In this case, the first insulating layer 14 is disposed on a surface of the first thermal conductive plate 133, and there is no need to provide an additional space and the installation between the battery cell 20 and the isolating component 13 is not affected.

As shown in FIGS. 16 and 17, a first insulating layer 14 of an embodiment of the present application may also be disposed on a surface of an isolating component 13 away from a first wall 21a, that is, the first insulating layer 14 may be disposed at one end of a first through hole 131 away from a pressure relief mechanism 213. As shown in FIG. 16, considering that the pressure relief mechanism 213 needs to have a sufficiently large space for deformation when the pressure relief mechanism 213 is actuated, the first insulating layer 14 is disposed on a surface of a second thermal conductive plate 134, which increases the space between the pressure relief mechanism 213 and the first insulating layer 14 and provides a sufficiently large space for deformation of the pressure relief mechanism 213, and the deformation of the pressure relief mechanism 213 is not affected.

It should be understood that the foregoing drawings respectively show the cases where the first insulating layer 14 is disposed on the first thermal conductive plate 133 and the second thermal conductive plate 133, or FIG. 14 may also be combined with FIG. 16, and at the meantime, one first insulating layer 14 is disposed at both ends of the first through hole 131, respectively, to enhance the safety of the pressure relief mechanism 213. In addition, when the pressure relief region 131 is a recess, the first insulating layer 14 is generally disposed at an opening of the recess, which is different from the case of the first through hole 131. For example, the opening of the recess may be toward or away from the pressure relief mechanism 213, and the first insulating layer 14 may cover the opening of the recess to improve the sealing effect on the basis of the recess and further protect the pressure relief mechanism 213.

It should be understood that a size of the first insulating layer 14 of the embodiment of the present application may be set according to the practical application. For example, an area of the first insulating layer 14 may be set to be equal to an area of the pressure relief mechanism 213, and the first insulating layer 14 may be disposed opposite to the pressure relief mechanism 213, so that the first insulating layer 14 can completely protect the pressure relief mechanism 213. However, considering the reliability and dimensional tolerance of the first insulating layer 14, the area of the first insulating layer 14 is generally set to be larger than the area of the pressure relief mechanism 213, and for example, it may be set to be larger than 50% of the area of the pressure relief mechanism 213 to ensure the reliability of the first insulating layer 14.

It should be understood that in order not to affect gas exhaustion of the battery cell 20 where thermal runaway occurs, when the pressure relief mechanism 213 is actuated, the first insulating layer 14 of the embodiment of the present application can be damaged, so that emissions from the battery cell 20 can be discharged via the pressure relief region 131. Considering that the temperature is relatively high when thermal runaway occurs in the battery cell 20, the first insulating layer 14 may be set as a temperature-sensitive material, that is, the first insulating layer 14 can be quickly melted when the pressure relief mechanism 213 is actuated, so that the emissions are discharged from the electrical chamber 11a via the pressure relief region 131.

It should be understood that the first insulating layer 14 should have a melting point less than or equal to 500°C considering that the temperature of the discharged emissions is generally greater than or equal to 500°C when the thermal runaway occurs in the battery cell 20. For example, a material having a melting point less than or equal to 300°C may be selected as the first insulating layer 14 in order to ensure smooth and rapid melting of the first insulating layer 14.

Specifically, a material of the first insulating layer 14 may be set as a phase change material, which may be a low melting point metal or a low melting point alloy, or the like, and the embodiment of the present application is not limited thereto. For example, the material of the first insulating layer 14 may be at least one of polypropylene (PP), polyethylene terephthalate (PET), polyvinyl chloride (PVC), polyethene (PE), rubber, tin and gallium-aluminum alloys with insulating treatment.

It should be understood that the first insulating layer 14 of the embodiment of the present application may seal the first through hole 131 in various manners. For example, the first insulating layer 14 may be adhered to the isolating component 13 by an adhesive, or the first insulating layer 14 may be disposed on the isolating component 13 by means of thermoplastic molding, which is not limited by the embodiment of the present application.

Optionally, the isolating component 13 of the embodiment of the present application may also be used as a thermal management component 13, that is, the isolating component may accommodate a fluid to adjust the temperature of the plurality of battery cells 20. Specifically, as shown in FIGS. 11 to 17, the isolating component 13 of the embodiment of the present application may also be provided with a flow channel 132, and the flow channel 132 is configured to accommodate the fluid to adjust the temperature for the plurality of battery cells 20. In addition, when the pressure relief mechanism 213 is actuated, the emissions discharged from the battery cell 20 through the pressure relief mechanism 213 may damage the flow channel 132, so that the fluid within the flow channel 134 is discharged, thereby lowering the temperature of the emissions.

It should be understood that the flow channel 132 of the embodiment of the present application may be formed by disposing a recess on the first thermal conductive plate 133 and/or the second thermal conductive plate 134. Specifically, a case where the second thermal conductive plate 134 is provided with a recess is taken as an example, as shown in FIGS. 11 to 17, the second thermal conductive plate 134 is provided with a recess with an opening toward the first thermal conductive plate 133, and when the first thermal conductive plate 133 is adhered to the second thermal conductive 134, the first thermal conductive plate 133 covers an opening of the recess to form a hollow structure, and the hollow structure is the flow channel 132.

Optionally, the shape, size, and position of the flow channel 132 of the embodiment of the present application may be flexibly set according to practical applications. For example, the flow channels 132 in FIGS. 11 and 17 are each set in a stripe shape, and the shapes and sizes of the plurality of flow channels 132 disposed at different positions of the isolating component 13 may be the same, but the embodiment of the present application is not limited thereto.

Considering that the emissions passing through the pressure relief mechanism 213 are discharged through the first through hole 131 disposed on the isolating component 13, in order to enable the fluid in the isolating component 13 to better lower the temperature of the emissions, or furthermore, in order to enable the isolating component 13 to be more easily damaged by the emissions to allow the fluid inside to be smoothly discharged, the flow channel 132 on the isolating component 13 is generally disposed at a periphery of the first through hole 131, so that more emissions passing through the first through hole 131 can directly come into contact with the flow channel 132, and the temperature thereof is lowered by the fluid in the flow channel 132. Furthermore, the flow channel 132 may be damaged in a large area when the emissions are come into contact with the flow channel 132, so that more fluid in the flow channel 132 can be smoothly discharged.

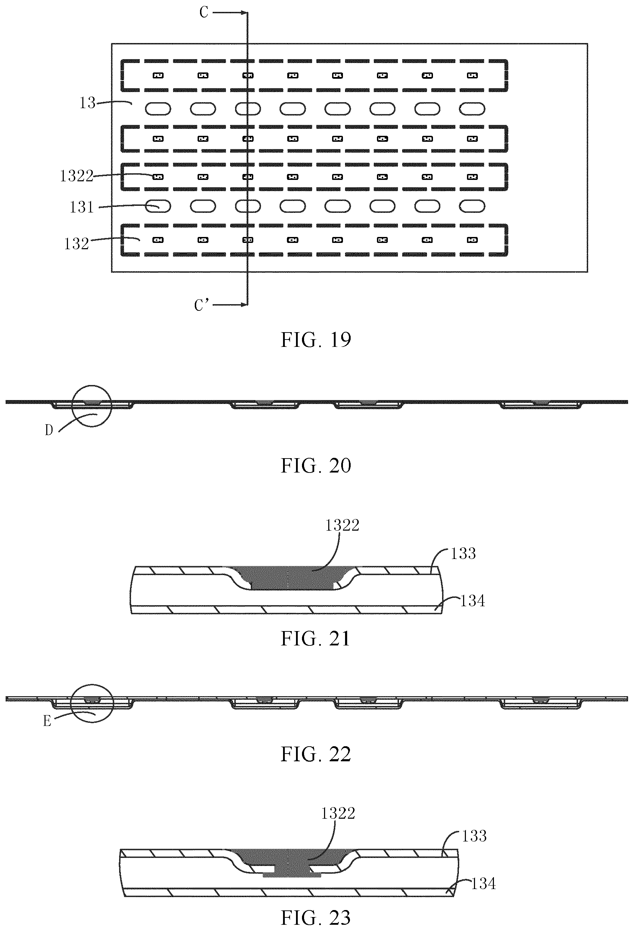

Furthermore, in order to enable the fluid in the flow channel 132 to better lower the temperature of the battery cell 20 where the thermal runaway occurs, the flow channel 132 may be provided with a through hole, and then the through hole is sealed with an insulating material so that when thermal runaway occurs in the battery cell 20, the insulating material is more easily damaged than other regions of the flow channel 132, and the fluid in the flow channel 132 may be removed timely, to lower the temperature of the battery cell 20. Specifically, FIG. 18 shows yet another schematic exploded view of an isolating component 13 of an embodiment of the present application, and FIG. 19 is a top view of an isolating component 13. As shown in FIG. 18, a second wall of a flow channel 132 may be provided with a second through hole 1321, and the second wall is attached to a first wall 21a, for example, the second wall may be a first thermal conductive plate 133, that is, the second through hole 1321 is disposed at a corresponding flow channel 132 of the first thermal conductive plate 133. As shown in FIG. 19, a battery 10 may further include: a second insulating layer 1322 configured to seal a second through hole 1321, and the second insulating layer 1322 is configured to be melted when a pressure relief mechanism 213 is actuated, so that a fluid flows out toward a battery cell 20 through the second through hole 1321.

Therefore, the flow channel 132 of the embodiment of the present application is provided with a second through hole 1321, and the second through hole 1321 is sealed by the second insulating layer 1322, so that the flow channel 132 is sealed and may accommodate a fluid. When thermal runaway occurs in the battery cell 20, the temperature of the battery cell 20 increases, the second insulating layer 1322 may be melted, so that the fluid in the flow channel 132 can flow out through the second through hole 1321, that is, it ensures that the flow channel 132 can be damaged, so that the flowing-out fluid may directly lower the temperature of the battery cell 20. Furthermore, when the fluid flows to the pressure relief region 131, the fluid may lower the temperature for the emissions from the battery cell 20, so as to achieve the purpose of preventing thermal diffusion.

It should be understood that the position, size, shape and number of the second through holes 1321 of the embodiment of the present application may be set according to the practical application. For example, the position of the second through hole 1321 may be reasonably set according to the position of the battery cell 20, so that the fluid may effectively lower the temperature of the battery cell 20 after it flows out from the second through hole 1321. For example, each flow channel 132 may be provided with a plurality of second through holes 1321, where the plurality of second through holes 1321 are in one-to-one correspondence with the plurality of battery cells 20. Similarly, each battery cell 20 is correspondingly provided with a second insulating layer 1322, so that when thermal runaway occurs in any one of battery cells 20, there is a fluid discharged from a corresponding second through hole 1321 to lowering the temperature. For another example, a plurality of second through holes 1321 and the second insulating layer 1322 may be disposed for each battery cell 20. Taking FIGS. 18 and 19 as examples, two second through holes 1321 and a corresponding second insulating layer 1322 may be disposed for each battery cell 20, and the two second through holes 1321 are symmetrical with respect to the pressure relief region 131. In this way, the two second through holes 1321 can be aligned with a first wall 21a of the battery cell 20 provided with the pressure relief mechanism 213, to timely and effectively lower the temperature of the battery cell 20 where thermal runaway occurs. For another example, an area of the second through hole 1321 should also be set reasonably. If it is set too large, the fluid flows out too fast, and a total amount of fluid in the flow channel 132 is limited, which may affect the effect of lowering the temperature. Therefore, an area of the second through hole 1321 is generally set to be less than or equal to 200mm².

Optionally, the second insulating layer 1322 of the embodiment of the present application may seal the second through hole 1321 in various manners. For example, the second insulating layer 1322 may be adhered to the isolating component 13 by an adhesive, or the second insulating layer 1322 may be disposed on the isolating component 13 by means of thermoplastic molding, which is not limited by the embodiment of the present application.

Taking a manner of thermoplastic molding as an example, several manners of disposing a second insulating layer 1322 on an isolating component 13 of an embodiment of the present application will be described below.

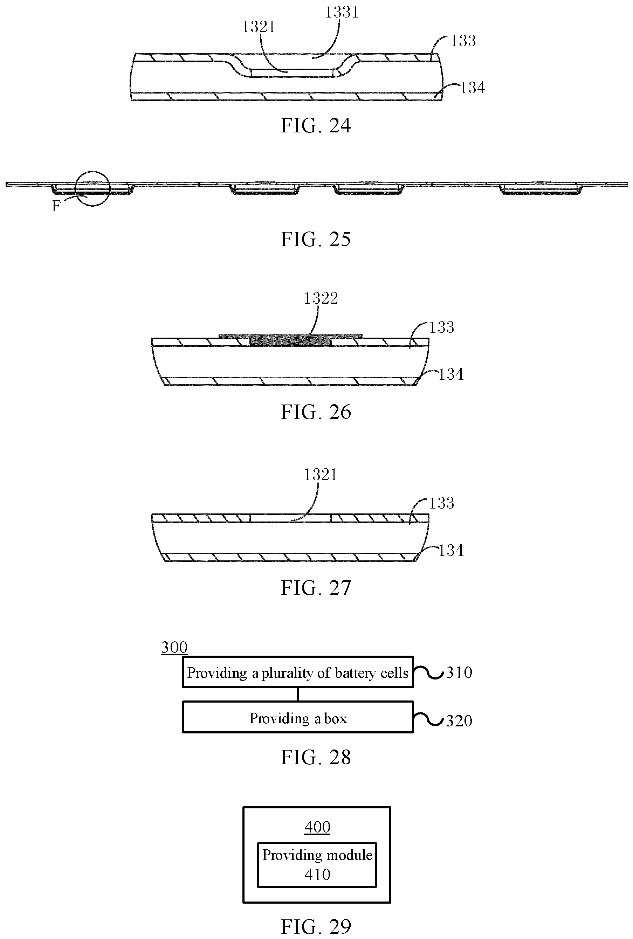

FIG. 20 is a possible schematic cross-sectional view taken along a direction C-C' in FIG. 19, and FIG. 21 is a partially enlarged view of a region D in FIG. 20; FIG. 22 is another possible schematic cross-sectional view taken along a direction C-C' in FIG. 19, FIG. 23 is a partially enlarged view of a region E shown in FIG. 22; and FIG. 24 is a schematic diagram of an isolating component 13 in which a second insulating layer 1322 is not provided in FIGS. 21 and 23.

As shown in FIG. 20 to FIG. 24, a second wall of a flow channel 132 may be provided with a recess 1331, that is, the recess 1331 is disposed at a position of the flow channel 132 of a first thermal conductive plate 133, and a bottom wall of the recess 1331 is provided with a second through hole 1321, an opening of the recess 1331 is toward the first wall 21a, and a second insulating layer 1322 is filled in the recess 1331, so as to increase a contact area of the second insulating layer 1322 and the first thermal conductive plate 133, thereby increasing the stability and reliability of the second insulating layer 1322.

Optionally, the second insulating layer 1322 may be disposed in a manner as shown in FIG. 21, that is, a surface of the second insulating layer 1322 toward the second thermal conductive plate 132 may be flush with a surface of the bottom wall of the recess 1331 toward the second thermal conductive plate 132. Alternatively, the second insulating layer 1322 may be disposed in a manner as shown in FIG. 23, that is, the second insulating layer 1322 covers, on a surface of the bottom wall of the recess 1331 away from the first wall 21a, the second through hole 1321, so that the second insulating layer 1322 is fixed to the recess 1331 by riveting, which can improve the stability and reliability of the second insulating layer 1322.

FIG. 25 is another possible schematic cross-sectional view taken along a direction C-C' in FIG. 19, FIG. 26 is a partially enlarged view of a region F shown in FIG. 25, and FIG. 27 is a schematic diagram of an isolating component 13 in which a second insulating layer 1322 is not provided in FIG. 26. As shown in FIGS. 25 to 27, a recess 1331 may not be provided, and a second insulating layer 1322 may be directly disposed in a second through hole 1321.

Optionally, with respect to a surface of the second insulating layer 1322 close to a first wall 21a, no matter which of the foregoing setting methods is adopted, the surface of the second insulating layer 1322 close to the first wall 21a may be set to be flush with a surface of a second wall close to the first wall 21a. For example, as shown in FIGS. 21 and 23, in this way, a surface of the isolating component 13 close to the first wall 21a is relatively flat, which does not affect the installation of other components disposed above the isolating component 13, for example, does not affect the installation of the battery cell 20.

Alternatively, a surface of the second insulating layer 1322 close to the first wall 21a may be set to protrude from a surface of the second wall close to the first wall 21a. For example, as shown in FIG. 26, this can increase the contact area of the second insulating layer 1322 and the first thermal conductive plate 133, and may ensure that the fluid in the flow channel 132 is not easy to flow out, thereby improving sealing performance and reliability of the second insulating layer 1322.

Similar to the first insulating layer 14, the second insulating layer 1322 should have a melting point less than or equal to 500°C considering that the temperature of the discharged emissions are generally greater than or equal to 500°C when the thermal runaway occurs in the battery cell 20. For example, a material having a melting point less than or equal to 300°C may be selected as the second insulating layer 1322 in order to ensure smooth and rapid melting of the second insulating layer 1322. Specifically, a material of the second insulating layer 1322 may also be set as a phase change material, or may be a low melting point metal, a low melting point alloy, or the like, which will not be described here for brevity.

Therefore, for the battery 10 of the embodiment of the present application, the isolating component 13 is provided with the first insulating layer 14, which may seal a pressure relief region 131, and isolate an electrical chamber 11a from a collecting chamber 11b. Even if sealing of the lower collecting chamber 11b fails, it may be ensured that the upper electrical chamber 11a is still sealed through the first insulating layer, thereby protecting the pressure relief mechanism 213 and improving safety of the pressure relief mechanism 213. For example, it may be ensured that substances or particles in the collecting chamber 11b do not damage or affect the pressure relief mechanism 213, so that the pressure relief mechanism 213 is not easily damaged when thermal runaway does not occur in the battery cell 20. Furthermore, when thermal runaway occurs in the battery cell 20, the pressure relief mechanism 213 is actuated, and the discharged high-temperature emissions may damage the first insulating layer 14, so that the first insulating layer 14 does not affect discharging of emissions from the battery cell 20 where thermal runaway occurs, to achieve gas exhaustion and heat dissipation timely, and the safety of the battery 10 is further enhanced.

In addition, the isolating component 13 of the embodiment of the present application may also be provided with a flow channel 132 to accommodate a fluid, and the fluid is configured to adjust a temperature of the battery cell 20. The flow channel 132 of the embodiment of the present application is provided with a second through hole 1321, and the second through hole 1321 is sealed by the second insulating layer 1322, so that the flow channel 132 is sealed and may accommodate a fluid. When thermal runaway occurs in the battery cell 20, the temperature of the battery cell 20 increases, and the second insulating layer 1322 may be melted, so that the fluid in the flow channel 132 can flow out through the second through hole 1321, that is, it ensures that the flow channel 132 can be damaged, so that the flowing-out fluid may directly lower the temperature of the battery cell 20. Furthermore, when the fluid flows to the pressure relief region 131, the fluid may lower the temperature for the emissions from the battery cell 20, so as to achieve the purpose of preventing thermal diffusion.

The battery and the power consumption device of the embodiment of the present application are described above, and a method and device for producing a battery of an embodiment of the present application will be described below. For the parts that are not described in detail, reference is made to the foregoing embodiments.

FIG. 28 shows a schematic flowchart of a method 300 for producing a battery according to an embodiment of the present application. As shown in FIG. 28, the method 300 may include: S310, providing a plurality of battery cells 20; and providing a box body, where the providing a box body specifically includes: providing an electrical chamber 11a, the electrical chamber 11a being configured to accommodate the plurality of battery cells 20, a first wall 21a of a battery cell 20 being provided with a pressure relief mechanism 213, and the pressure relief mechanism 213 being configured to be actuated when an internal pressure or temperature of the battery cell 20 reaches a threshold, to relieve the internal pressure; providing a collecting chamber 11b, the collecting chamber 11b being configured to collect emissions from the battery cell 20 when the pressure relief mechanism 213 is actuated; providing an isolating component 13, the isolating component 13 being configured to isolate the electrical chamber 11a from the collecting chamber 11b, the isolating component 13 being provided with a pressure relief region 131 corresponding to the pressure relief mechanism 213, and the pressure relief region 131 being configured to discharge the emissions from the electrical chamber 11a when the pressure relief mechanism 213 is actuated; and providing a first insulating layer 14, the first insulating layer 14 being configured to seal the pressure relief region 131 to isolate the pressure relief mechanism 213 from the collecting chamber 11b, the first insulating layer 14 being configured to be damaged when the pressure relief mechanism 213 is actuated, so that the emissions are discharged from the electrical chamber 11a via the pressure relief region 131.

FIG. 29 is a schematic block diagram of a device 400 for producing a battery according to an embodiment of the present application. As shown in FIG. 29, the device 400 may include: a providing module 410. The providing module 410 is configured to: provide a plurality of battery cells 20; and provide a box body, where the providing module 410 is further configured to: provide an electrical chamber 11a, the electrical chamber 11a being configured to accommodate the plurality of battery cells 20, a first wall 21a of a battery cell 20 being provided with a pressure relief mechanism 213, and the pressure relief mechanism 213 being configured to be actuated when an internal pressure or temperature of the battery cell 20 reaches a threshold, to relieve the internal pressure; provide a collecting chamber 11b, the collecting chamber 11b being configured to collect emissions from the battery cell 20 when the pressure relief mechanism 213 is actuated; provide an isolating component 13, the isolating component 13 being configured to isolate the electrical chamber 11a from the collecting chamber 11b, the isolating component 13 being provided with a pressure relief region 131 corresponding to the pressure relief mechanism 213, and the pressure relief region 131 being configured to discharge the emissions from the electrical chamber 11a when the pressure relief mechanism 213 is actuated; and provide a first insulating layer 14, the first insulating layer 14 being configured to seal the pressure relief region 131 to isolate the pressure relief mechanism 213 from the collecting chamber 11b, the first insulating layer 14 being configured to be damaged when the pressure relief mechanism 213 is actuated, so that the emissions are discharged from the electrical chamber 11a via the pressure relief region 131.

Although the present application has been described with reference to the preferred embodiments, various modifications may be made thereto and the components therein may be replaced with equivalents without departing from the scope of the present application. In particular, each technical feature mentioned in each embodiment may be combined in any manner, as long as there is no structural conflict. The present application is not limited to the specific embodiments disclosed herein, but includes all technical solutions falling within the scope of the claims.

## Claims

1. A box body of a battery, comprising:
an electrical chamber (11a), configured to accommodate a plurality of battery cells (20), a first wall (21a) of a battery cell (20) being provided with a pressure relief mechanism (213), and the pressure relief mechanism (213) being configured to be actuated when an internal pressure or temperature of the battery cell (20) reaches a threshold, to relieve the internal pressure;
a collecting chamber (11b), configured to collect emissions from the battery cell (20) when the pressure relief mechanism (213) is actuated;
an isolating component (13), configured to isolate the electrical chamber (11a) from the collecting chamber (11b), the isolating component (13) being provided with a pressure relief region (131) corresponding to the pressure relief mechanism (213), and the pressure relief region (131) being configured to discharge the emissions from the electrical chamber (11a) when the pressure relief mechanism (213) is actuated; and
a first insulating layer (14), configured to seal the pressure relief region (131) to isolate the pressure relief mechanism (213) from the collecting chamber (11b), the first insulating layer (14) being configured to be damaged when the pressure relief mechanism (213) is actuated, so that the emissions are discharged from the electrical chamber (11a) via the pressure relief region (131).

2. The box body according to claim 1, wherein the pressure relief region (131) is a first through hole penetrating the isolating component (13).

3. The box body according to claim 1 or 2, wherein the first insulating layer (14) is disposed on a surface of the isolating component (13) close to the first wall (21a); and/or,
the first insulating layer (14) is disposed on a surface of the isolating component (13) away from the first wall (21a).

4. The box body according to any one of claims 1 to 3, wherein the first insulating layer (14) is configured to be melted when the pressure relief mechanism (213) is actuated, so that the emissions are discharged from the electrical chamber (11a) via the pressure relief region (131).

5. The box body according to any one of claims 1 to 4, wherein an area of the first insulating layer (14) is larger than an area of the pressure relief mechanism (213).

6. The box body according to any one of claims 1 to 5, wherein the isolating component (13) is provided with a flow channel (132), and the flow channel (132) is configured to accommodate a fluid to adjust a temperature of the battery cell (20).

7. The box body according to claim 6, wherein the flow channel (132) is configured to be damaged when the pressure relief mechanism (213) is actuated, so that the fluid is discharged from an inner portion of the flow channel (132).

8. The box body according to claim 7, wherein a second wall of the flow channel (132) is provided with a second through hole (1321), the second wall is attached to the first wall (21a), and the box body further comprises:
a second insulating layer (1322), configured to seal the second through hole (1321), the second insulating layer (1322) being configured to be melted when the pressure relief mechanism (213) is actuated, so that the fluid flows out toward the battery cell (20) through the second through hole (1321).

9. The box body according to claim 8, wherein the flow channel (132) is provided with a plurality of second through holes (1321), and the plurality of second through holes (1321) are in one-to-one correspondence with the plurality of battery cells (20).

10. The box body according to claim 8 or 9, wherein the second wall is provided with a recess (1331), a bottom wall of the recess (1331) is provided with the second through hole (1321), an opening of the recess (1331) is toward the first wall (21a), and the second insulating layer (1322) is filled in the recess (1331).

11. The box body according to claim 10, wherein the second insulating layer (1322) covers, on a surface of the bottom wall of the recess (1331) away from the first wall (21a), the second through hole (1321).

12. The box body according to any one of claims 8 to 11, wherein a surface of the second insulating layer (1322) close to the first wall (21a) is flush with a surface of the second wall close to the first wall (21a).

13. The box body according to any one of claims 8 to 11, wherein a surface of the second insulating layer (1322) close to the first wall (21a) protrudes from a surface of the second wall close to the first wall (21a).

14. The box body according to any one of claims 8 to 13, wherein an area of the second through hole (1321) is less than or equal to 200mm².

15. A battery, comprising:
the box body according to any one of claims 1 to 14; and
a plurality of battery cells (20) accommodated in the box body, a first wall (21a) of a battery cell (20) being provided with a pressure relief mechanism (213), and the pressure relief mechanism (213) being configured to be actuated when an internal pressure or temperature of the battery cell (20) reaches a threshold, to relieve the internal pressure.

16. A power consumption device, comprising: the battery according to claim 15, the battery being configured to provide electric energy for the power consumption device.

17. A method for producing a battery, comprising:
providing a plurality of battery cells (20); and
providing a box body, wherein the providing a box body comprises:
providing an electrical chamber (11a), the electrical chamber (11a) being configured to accommodate the plurality of battery cells (20), a first wall (21a) of a battery cell (20) being provided with a pressure relief mechanism (213), and the pressure relief mechanism (213) being configured to be actuated when an internal pressure or temperature of the battery cell (20) reaches a threshold, to relieve the internal pressure;
providing a collecting chamber (11b), the collecting chamber (11b) being configured to collect emissions from the battery cell (20) when the pressure relief mechanism (213) is actuated;
providing an isolating component (13), the isolating component (13) being configured to isolate the electrical chamber (11a) from the collecting chamber (11b), the isolating component (13) being provided with a pressure relief region (131) corresponding to the pressure relief mechanism (213), and the pressure relief region (131) being configured to discharge the emissions from the electrical chamber (11a) when the pressure relief mechanism (213) is actuated; and
providing a first insulating layer (14), the first insulating layer (14) being configured to seal the pressure relief region (131) to isolate the pressure relief mechanism (213) from the collecting chamber (11b), the first insulating layer (14) being configured to be damaged when the pressure relief mechanism (213) is actuated, so that the emissions are discharged from the electrical chamber (11a) via the pressure relief region (131).

18. A device for producing a battery, comprising: a providing module configured to:
provide a plurality of battery cells (20); and
provide a box body, wherein the providing module is further configured to:
provide an electrical chamber (11a), the electrical chamber (11a) being configured to accommodate the plurality of battery cells (20), a first wall (21a) of a battery cell (20) being provided with a pressure relief mechanism (213), and the pressure relief mechanism (213) being configured to be actuated when an internal pressure or temperature of the battery cell (20) reaches a threshold, to relieve the internal pressure;
provide a collecting chamber (11b), the collecting chamber (11b) being configured to collect emissions from the battery cell (20) when the pressure relief mechanism (213) is actuated;
provide an isolating component (13), the isolating component (13) being configured to isolate the electrical chamber (11a) from the collecting chamber (11b), the isolating component (13) being provided with a pressure relief region (131) corresponding to the pressure relief mechanism (213), and the pressure relief region (131) being configured to discharge the emissions from the electrical chamber (11a) when the pressure relief mechanism (213) is actuated; and
provide a first insulating layer (14), the first insulating layer (14) being configured to seal the pressure relief region (131) to isolate the pressure relief mechanism (213) from the collecting chamber (11b), the first insulating layer (14) being configured to be damaged when the pressure relief mechanism (213) is actuated, so that the emissions are discharged from the electrical chamber (11a) via the pressure relief region (131).
